Europäisches Patentamt

(19) European Patent Office

Office européen des brevets

(11) Numéro de publication: **0 188 974**
**B1**

---

(12) **FASCICULE DE BREVET EUROPEEN**

---

(45) Date de publication du fascicule du brevet:
**12.07.89**

(51) Int. Cl.⁴: **G01S 15/89**, G01S 13/90

(21) Numéro de dépôt: **85402642.4**

(22) Date de dépôt: **27.12.85**

---

(54) Procédé pour améliorer la restitution des images fournies par une sonar latéral et dispositif pour sa mise en oeuvre.

---

(30) Priorité: **28.12.84 FR 8419963**

(43) Date de publication de la demande:
**30.07.86 Bulletin 86/31**

(45) Mention de la délivrance du brevet:
**12.07.89 Bulletin 89/28**

(84) Etats contractants désignés:
**DE GB IT NL**

(56) Documents cités:
**GB-A- 823 304**

**IEEE TRANSACTIONS ON GEOSCIENCE AND REMOTE SENSING, vol.
GE-22, no. 2, mars 1984, pages 106-112, IEEE, New York, US; J.C. CURLANDER: "Utilization of spaceborne SAR data for mapping"**
**WESTINGHOUSE ENGINEER,
vol. 26, no. 6, novembre 1966, pages 163-168, Pittsburgh, US; J.T. LAING et al.: "Seeing under the sea with sonar"**

(73) Titulaire: **INSTITUT FRANCAIS DU PETROLE, 4, Avenue de Bois-Préau, F-92502 Rueil-Malmaison(FR)**

(72) Inventeur: **Bourgeois, Aline, 37, rue des Plantes, F-75014 Paris(FR)**
Inventeur: **Jan, Didier, Allée Verte Porsmilin, F-29290 Locmaria-Plouzane(FR)**

---

## Description

L'invention a pour objet un procédé pour améliorer la restitution des images fournies par un sonar à vision latérale et en particulier d'un sonar latéral comportant une chaine d'acquisition numérique.

Les sonars à visée latérale sont, on le rappelle, des sonars pourvus d'antennes acoustiques émettrices-réceptrices fixées à la coque d'un navire ou mieux d'un corps fuselé ou "poisson" tracté en immersion par le navire, et dont les axes principaux d'émission-réception sont orientés suivant des directions obliques dans un plan transversal perpendiculaire à la trajectoire du navire.

Les antennes comportent généralement une pluralité de transducteurs alignés suivant une direction parallèle à l'axe longitudinal du navire ou du poisson, de manière que leurs diagrammes directionnels possèdent un angle d'ouverture faible de part et d'autre du plan vertical transversal et un angle d'ouverture plus large dans ce même plan.

Les transducteurs émetteurs sont alimentés à intervalles réguliers et envoient des impulsions acoustiques dans une direction oblique vers le fond de l'eau. Ces impulsions viennent irradier ou "insonifier" le fond d'un côté ou des deux côtés du navire ou poisson suivant une bande étroite allongée perpendiculairement à la direction d'avancement et sont rétrodiffusées vers la surface.

L'antenne réceptrice ou les antennes réceptrices, du fait de leur diagramme directionnel, sont adaptées à capter préférentiellement les échos provenant des bandes irradiées.

Les signaux reçus par les transducteurs, en écho aux impulsions émises, sont amplifiées de préférence avec un gain d'amplification croissant avec le temps pour corriger les variations d'amplitude dues à l'obliquité des trajets de propagation, puis démodulés afin d'obtenir des signaux à basse fréquence représentatifs de l'enveloppe des signaux reçus.

Les signaux démodulés sont enregistrés et des corrections d'obliquité tenant compte de la hauteur d'eau sous le bateau, sont apportés aux enregistrements pour obtenir une représentation linéaire du fond.

Les images que l'on obtient de la surface du fond ne sont en général pas satisfaisantes en ce qui concerne les zones correspondant à une faible obliquité des trajets acoustiques. Cela tient en particulier, comme on le verra plus en détail dans la description, à ce que les dimensions transversales des portions de surface ayant réverbéré les échos reçus durant un même intervalle de temps sont beaucoup plus grandes au début de chaque phase de réception, c'est-à-dire pour les directions proches de la verticale que pour les directions plus inclinées par rapport à celle-ci, et par conséquent au faible pouvoir de résolution transversal du sonar pour les zones proches.

Dans les sonars comportant une chaine d'acquisition numérique, cet intervalle de temps est par exemple la période (ou pas) avec laquelle les signaux démodulés sont échantillonnés.

Le procédé selon l'invention permet d'éviter les inconvénients ci-dessus mentionnés.

Il s'applique à l'amélioration d'images obtenues au cours de cycles d'émission et de réception successifs comportant une étape d'émission d'impulsions acoustiques latéralement et en oblique vers la surface au-dessus de laquelle avance le sonar, et une étape de réception des signaux acoustiques réverbérés par la surface, d'échantillonnage périodique de ces signaux et de numérisation des échantillons obtenus.

Il est caractérisé en ce que l'échantillonnage comporte une sélection des échantillons avec un intervalle de temps entre échantillons croissant au cours de l'étape de réception.

La période d'échantillonnage est déterminée par exemple en fonction de la hauteur d'eau et de la durée de propagation des signaux réverbérés, pour que la distribution spatiale des éléments de la surface du fond correspondant aux échantillons de signaux sélectionnés, soit homogène sur toute la surface réverbérante restituée par les images.

Les avantages découlant de la méthode selon l'invention et les caractéristiques du dispositif de mise en oeuvre, apparaitront mieux à la lecture de la description de modes de réalisation donnés à titre d'exemples non limitatifs, et en se référant aux dessins annexés où :

- la figure 1 représente schématiquement un sonar à visée latérale et la disposition de ses faisceaux d'émission et de réception,
- la figure 2 montre la relation géométrique entre les instants de prélèvements des échantillons successifs et les éléments de surface du fond correspondant aux échantillons prélevés,
- la figure 3 représente un schéma synoptique d'une chaine de réception d'un sonar à visée latérale,
- la figure 4 représente un schéma synoptique d'un premier mode de réalisation du dispositif de mise en oeuvre du procédé selon l'invention,
- la figure 5 représente un schéma synoptique d'un second mode de réalisation du dispositif, et
- la figure 6 représente un schéma synoptique d'un troisième mode de réalisation du dispositif.

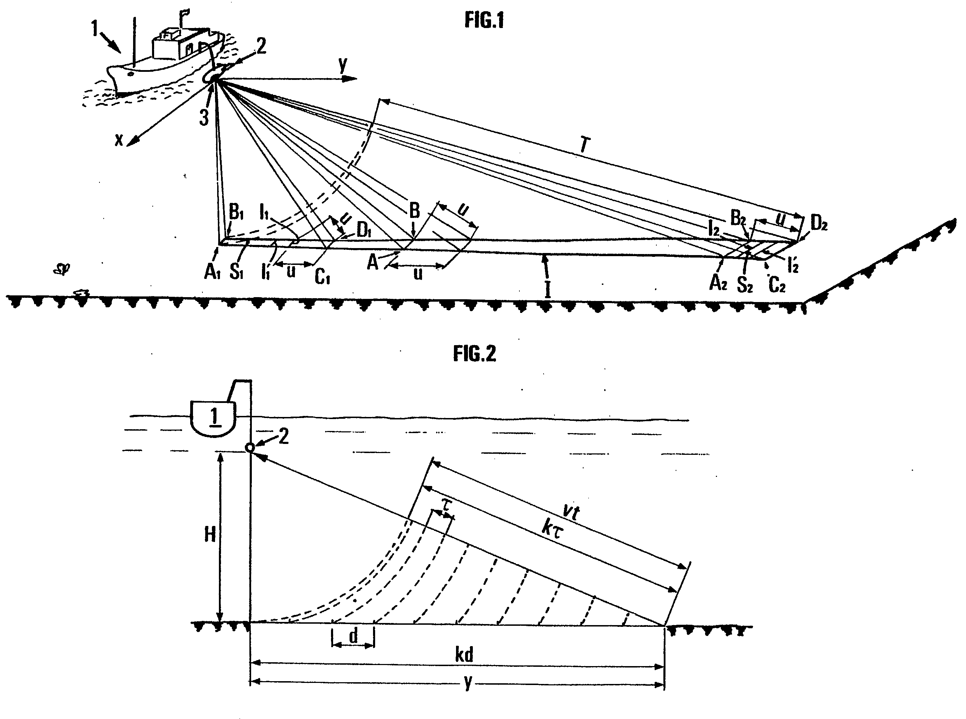

Les images du fond, sur un côté au moins de la route suivie par un navire 1 (Fig. 1), sont obtenues en immergeant un corps fuselé 2 pourvu latéralement d'au moins une antenne directive 3 adaptée à émettre et à recevoir des ultrasons, dont l'axe est orienté dans un plan transversal et obliquement par rapport à la verticale. Le diagramme de directivité de cette antenne comporte un lobe principal très étroit de part et d'autre du plan transversal et assez ouvert dans ce même plan.

Les valeurs des angles au sommet des faisceaux principaux émis et reçus dans le plan longitudinal et dans le plan transversal respectivement sont par exemple de 1° à 5° et de 30° à 60°, si bien que la surface du fond irradiée ou "insonifiée" par chaque impulsion acoustique émise est une bande transversale assez étroite l.

Des impulsions acoustiques sont émises périodiquement. Les ondes acoustiques sont réverbérées par le fond et sont captées par l'antenne 3. Les échos provenant des directions de faible obliquité arrivent les premiers. A leur suite arrivent les échos provenant de directions d'obliquité croissante.

Comme on le verra ci-après dans la description du dispositif de mise en oeuvre du procédé selon l'invention, les signaux traduisant les échos reçus sont convenablement amplifiés et après détection de leurs enveloppes, sont enregistrés. L'enregistrement est effectué classiquement en prélevant des échantillons des enveloppes détectées en les numérisant et en rangeant les mots numériques obtenus dans un organe de mémorisation. Les échantillons sont prélevés avec une fréquence d'échantillonnage constante $f_H$.

On voit sur la figure 1 que les échos reçus pendant un même intervalle de temps u ont été réverbérés par des portions de surface différentes selon la position de cet intervalle dans la fenêtre de réception de durée T.

L'aire $A_1$, $B_1$, $C_1$, $D_1$, de la portion de surface $S_1$ correspondant à des directions de faible obliquité est plus grande par exemple que l'aire $A_2$, $B_2$, $C_2$, $D_2$, de la portion de surface $S_2$ correspondant des trajets très inclinés. De ce fait, deux lignes de surface ($l_1$, $l'_1$), ($l_2$, $l'_2$) correspondant à deux échantillons successifs quelconques sont inégalement distantes les unes des autres selon leurs emplacements dans la surface réverbérante.

Le pouvoir de résolution du sonar varie par conséquent dans de notables proportions. Il est relativement faible pour les zones de surface réverbérantes les plus proches.

Le procédé selon l'invention permet, par une variation de la période d'échantillonnage $\tau$ ($\tau = 1/f_H$) de maintenir sensiblement égaux les intervalles entre les lignes de terrain qui correspondent aux échantillons sélectionnés, quel que soit l'instant de prélèvement des échantillons dans la fenêtre de réception T et quelle que soit la hauteur d'eau H.

La distance latérale y d'un point de la surface réverbérante par rapport à la verticale est liée (Fig. 2) à la hauteur d'eau H, à la durée de propagation et la vitesse de propagation v des ondes acoustiques par une relation du type

$$H^2 + Y^2 = (H + vt)^2 \qquad (1)$$

La durée de propagation étant égale à un nombre k d'intervalles d'échantillonnage et la distance latérale y étant égale à un même nombre k d'espacements de valeurs d, la relation (1) s'exprime encore sous la forme :

$$H^2 + k^2d^2 = v^2k^2\tau^2 \qquad (2)$$

Un calcul simple montre que pour obtenir des espacements constants d, il faut que la période d'échantillonnage varie en fonction du numéro d'ordre k des échantillons prélevés, en accord avec la relation :

$$\tau = \frac{1}{v}\left[\frac{H^2}{k^2} + d^2\right]^{\frac{1}{2}} - \frac{H}{vk} \qquad (3)$$

La mise en oeuvre du procédé peut s'effectuer en faisant varier l'intervalle de temps d'échantillonnage en fonction du temps, de manière à suivre exactement la relation 3. Le procédé peut être mis en oeuvre également en ajustant l'intervalle de temps par paliers de manière à suivre approximativement la relation 3, le pas d'ajustement dépendant de la précision requise pour la restitution des images.

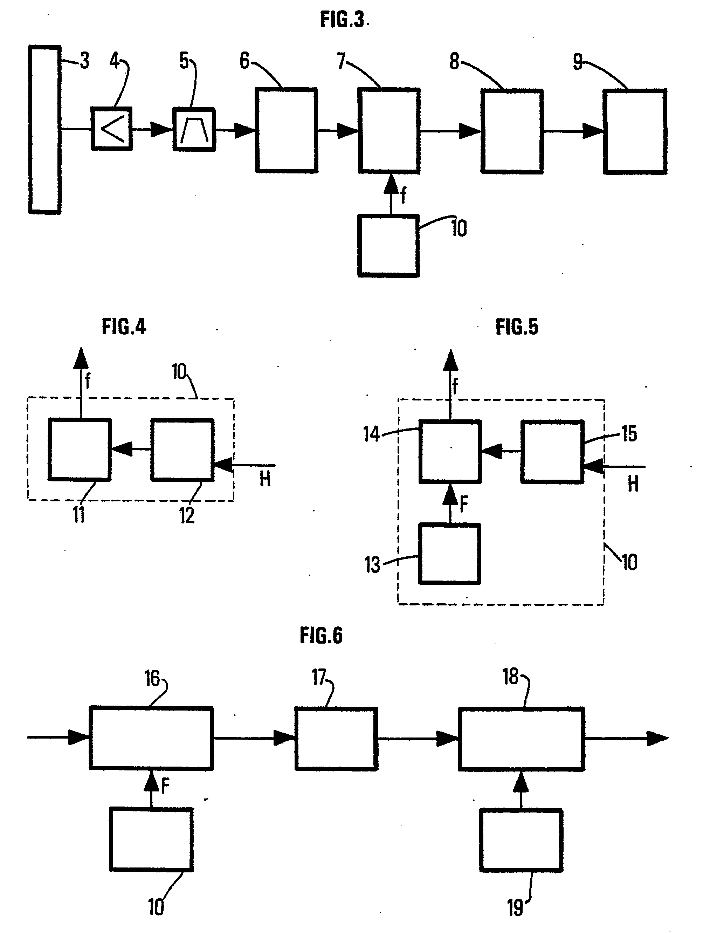

Le dispositif de mise en oeuvre du procédé est associé à une chaine de réception de signaux de sonar comportant (Fig. 3) un amplificateur 4 dont le gain augmente à partir du début de la fenêtre de réception des échos, de manière à tenir compte de l'affaiblissement des ondes acoustiques en fonction de la durée de propagation. L'amplificateur 4 est connecté à l'entrée d'un filtre passe-bande 5 centré sur la fréquence prépondérante des signaux reçus.

La sortie du filtre 5 est connecté à un ensemble de démodulation 6 adapté à délivrer des signaux représentatifs de l'enveloppe des échos reçus.

Un élément d'échantillonnage 7 est connecté à la sortie de l'ensemble de démodulation 6. Les échantillons de signaux produits sont ensuite numérisés dans un convertisseur analogique-numérique 8 puis transférés dans un élément de mémorisation 9.

Le fonctionnement de l'élément d'échantillonnage 7 est cadencé par un signal d'horloge fourni par un ensemble de synchronisation 10.

Suivant un premier mode de réalisation (Fig. 4), le signal d'horloge est engendré par un oscillateur 11 du type VCO, commandé par la tension délivrée par un calculateur 12. Un écho-sondeur auxiliaire (non représenté) fournit les valeurs de la hauteur d'eau H au calculateur 12 qui détermine la tension à appliquer à l'oscillateur 11 pour obtenir des espacements d sensiblement constants.

Suivant un second mode de réalisation (Fig. 5), l'ensemble de synchronisation 10 comporte une horloge 13 produisant un signal de référence dont la fréquence F est un multiple élevé de la fréquence moyenne d'échantillonnage $f_H$. Le signal d'horloge est appliqué à des éléments diviseurs 14 dont le facteur de division peut prendre une pluralité de valeurs différentes. La sélection de la valeur appropriée est déterminée par un calculateur 15 en fonction du temps de propagation et de la hauteur d'eau H.

Suivant un troisième mode de réalisation (Fig. 6), l'ensemble de synchronisation comporte d'un oscillateur 10 produisant un signal de référence dont la fréquence F est très supérieure à la fréquence d'échantillonnage nécessaire pour obtenir des enregistrements avec un pouvoir de résolution satisfaisant. Le signal d'horloge F est appliqué directement à un échantillonneur-bloqueur 16 (sample and hold unit). Les échantillons prélevés à la fréquence F sont tous numérisés par un convertisseur analogique-numérique 17 et mémorisés par un organe d'enregistrement tel qu'une mémoire vive 18 (RAM).

L'ensemble de synchronisation comporte aussi un calculateur programmable 19 qui est couplé avec la mémoire vive 18. La sélection, parmi les échantillons mémorisés, de ceux qui vont servir à la constitution des images, est effectuée par le calculateur 19 en fonction du temps de propagation et de la hauteur d'eau H. Les intervalles de temps entre les échantillons effectivement retenus seront des multiples de la période du signal de référence.

Suivant une variante du mode de réalisation, le calculateur 19 sélectionne l'ensemble des échantillons devant servir à la constitution des images directement à la sortie de l'échantillonneur-bloqueur 16 et commande leur application au convertisseur analogique-numérique 17.

## Revendications

1. Procédé d'amélioration de la restitution des images de la surface d'un fond dans un sonar à visée latérale et avançant au-dessus de ladite surface à une hauteur donnée, comportant au cours de cycles d'émission et de réception successifs une étape d'émission d'impulsions acoustiques latéralement et dans une direction oblique vers ladite surface, et une étape de réception des signaux acoustiques réverbérés par ladite surface, d'échantillonnage périodique de ces signaux et de numérisation des échantillons obtenus, caractérisé en ce que l'échantillonnage comporte une sélection des échantillons avec un intervalle de temps entre échantillons croissant au cours de l'étape de réception.

2. Procédé selon la revendication 1, caractérisée en ce que la période d'échantillonnage est déterminée en fonction de la hauteur donnée et de la durée de propagation des signaux réverbérés pour que la distribution spatiale des éléments de surface correspondant aux échantillons de signaux sélectionnés, soit homogène sur toute la surface réverbérant les signaux acoustiques, restituée par les images.

3. Dispositif porté par un sonar à visée latérale avançant au-dessus de la surface d'un fond à une hauteur donnée, pour améliorer la restitution d'images produites par le sonar, lequel dispositif comporte des moyens d'émission d'impulsions acoustiques, des moyens de réception (4, 5, 6) des signaux acoustiques réverbérés par ladite surface, des moyens d'échantillonnage (7, 16), des moyens de numérisation (8) des échantillons obtenus un ensemble de synchronisation (10) pour engendrer un signal d'horloge commandant les moyens d'échantillonnage et des moyens d'enregistrement, ledit dispositif étant caractérisé en ce que l'ensemble de synchronisation est adapté en outre pour sélectionner une partie au moins des échantillons prélevés par les moyens d'échantillonnage, les échantillons sélectionnés étant séparés par des intervalles de temps croissants.

4. Dispositif selon la revendication 3, caractérisé en ce que ledit ensemble de synchronisation comporte des éléments pour engendrer un signal d'horloge ($f_H$) dont la fréquence décroit en fonction du temps de propagation des signaux réverbérés, tous les échantillons de signaux issus des moyens d'échantillonnage étant numérisés et enregistrés.

5. Dispositif selon la revendication 4, caractérisé en ce que ledit ensemble de synchronisation comporte un oscillateur à fréquence variable (11) dont la fréquence d'oscillation dépend d'une tension de commande et des moyens (12) pour engendrer une tension de commande adaptée à faire décroître la fréquence d'oscillation de l'oscillateur (11) en fonction du temps de propagation des signaux réverbérés et de la hauteur donnée.

6. Dispositif selon la revendication 4, caractérisé en ce que ledit ensemble de synchronisation comporte un oscillateur à fréquence fixe (13), un élément diviseur (14) adapté à engendrer une pluralité de signaux dont les fréquences sont des sous-multiples de la fréquence du signal dudit oscillateur (13) et un élément (15) pour sélectionner successivement parmi les signaux engendrés par l'élément diviseur, des signaux dont la fréquence décroit par palier en fonction du temps de propagation des signaux réverbérés.

7. Dispositif selon la revendication 3, caractérisé en ce que ledit ensemble de synchronisation comporte un oscillateur (10) adapté à engendrer un signal d'horloge de fréquence fixe et des moyens (19) pour prélever, parmi tous les échantillons de signaux issus des moyens d'échantillonnage (16) un ensemble d'échantillons séparés par des intervalles de temps croissants dont les valeur sont déterminées en fonction du temps de propagation des signaux réverbérés et de la hauteur donnée.

## Patentansprüche

1. Verfahren zur Wiedergabeverbesserung der Bilder der Oberfläche eines Bodens in einem sich oberhalb dieser Oberfläche auf einer gegebenen Höhe vorwärtsbewegenden Seitensichtsonar, das einen Schritt des Aussendens akustischer Impulse seitlich und in einer Richtung schräg gegen diese Oberfläche sowie einen Schritt des Empfangs der von dieser Oberfläche rückgestrahlten akustischen Signale eine periodische Probennahme dieser Signale und eine Digitalisierung der erhaltenen Proben aufweist, dadurch gekennzeichnet, daß die Probennahme eine Auswahl von Proben mit einem Zeitintervall zwischen den Proben vorsieht, das im Verlauf des Empfangsschritts zunimmt.

2. Verfahren nach Anspruch 1, dadurch gekennzeichnet, daß die Probennahmenperiode als Funktion der gegebenen Höhe und der Fortpflanzungsdauer der rückgestrahlten Signale bestimmt wird, so daß die den ausgewählten Signalproben entsprechende räumliche Verteilung von Oberflächenelementen homogen über die gesamte die akustischen Signale rückstrahlende Oberfläche, welche durch die Bilder wiedergegeben wird, ist.

3. Von einem sich oberhalb der Oberfläche eines Bodens auf einer gegebenen Höhe vorwärtsbewegenden Seitensichtsonar getragene Vorrichtung zur Verbesserung der Wiedergabe von durch das Sonar erzeugten Bildern, wobei die Vorrichtung Einrichtungen zum Aussenden akustischer Impulse, Einrichtungen zum Empfang (4, 5, 6) der von der Oberfläche rückgestrahlten akustischen Signale, Probennahmeeinrichtungen (7, 16), Einrichtungen zur Digitalisierung (8) der erhaltenen Proben, eine Synchronisationsanordnung (10) zur Erzeugung eines die Probennahmeeinrichtungen steuernden Taktgebersignals, und Aufzeichnungseinrichtungen aufweist, wobei die Vorrichtung dadurch gekennzeichnet ist, daß die Synchronisationsanordnung überdies so ausgebildet ist, daß sie wenigstens einen Teil der von den Probennahmeeinrichtungen entnommenen Proben auswählt, wobei die ausgewählten Proben durch zunehmende Zeitintervalle voneinander getrennt sind.

4. Vorrichtung nach Anspruch 3, dadurch gekennzeichnet, daß diese Synchronisationsanordnung Elemente zur Erzeugung eines Taktgebersignals (f$_H$) umfaßt, dessen Frequenz als Funktion der Fortpflanzungszeit für die rückgestrahlten Signale abnimmt, wobei sämtliche aus den Probennahmeeinrichtungen stammenden Probennahmesignale digitalisiert und aufgezeichnet sind.

5. Vorrichtung nach Anpruch 4, dadurch gekennzeichnet, daß die Synchronisationsanordnung einen Oszillator (11) mit variabler Frequenz, dessen Schwingungsfrequenz von einer Steuerspannung abhängt und Einrichtungen (12) aufweist, um eine Steuerspannung zu erzeugen, die so ausgelegt ist, daß die Schwingungsfrequenz des Oszillators (11) als Funktion der Fortpflanzungszeit der rückgestrahlten Signale und der gegebenen Höhe abnimmt.

6. Vorrichtung nach Anspruch 4, dadurch gekennzeichnet, daß diese Synchronisationsanordnung einen Oszillator mit fester Frequenz (13), ein Teilerelement (14), das so ausgelegt ist, daß mehrere Signale erzeugt werden, deren Frequenzen Untervielfache der Frequenz des Signals des Oszillators (13) sind, und ein Element (15) umfaßt, um aufeinanderfolgend aus den durch das Teilerelement erzeugten Signalen Signale auszuwählen, deren Frequenz stufenweise als Funktion der Fortpflanzungszeit der rückgestrahlten Signale abnimmt.

7. Vorrichtung nach Anspruch 3, dadurch gekennzeichnet, daß diese Synchronisationsanordnung einen Oszillator (10), der so ausgelegt ist, daß er ein Taktgebersignal fester Frequenz erzeugt, und Einrichtungen (19) umfaßt, um aus sämtlichen der aus den Probennahmeeinrichtungen (16) stammenden Signale eine Gruppe von Proben zu entnehmen, die durch zunehmende Zeitintervalle voneinander getrennt sind, deren Werte als Funktion der Fortpflanzungszeit der rückgestrahlten Signale und der gegebenen Höhe bestimmt sind.

## Claims

1. A method for improving the regeneration of the images of the surface of a bottom in a side-looking sonar travelling over said surface at a given height, comprising a phase in which acoustic pulses are transmitted laterally and in an oblique direction towards said surface, and a phase in which the acoustic signals reflected by said surface are received, these signals are periodically sampled and the samples obtained are digitized, characterized in that the sampling comprises selection of samples with an interval of time between samples increasing in the course of the receiving phase.

2. A method as in claim 1, characterized in that the sampling period is determined as a function of the given height and the propagation time of the reflected signals so that the spatial distribution of the surface elements corresponding to the selected signal samples is homogeneous over the entire surface reflecting the acoustic signals and regenerated by the images.

3. A device carried by a side-looking sonar travelling over the surface of a bottom at a given height to improve the regeneration of images produced by the sonar, which device comprises means for transmitting acoustic pulses, means (4, 5, 6) for receiving the acoustic signals reflected by said surface, sampling means (7, 16), means (8) for digitizing the samples obtained, a synchronization means (10) to generate a clock signal controlling the sampling means, and recording means, said device being characterized in that the synchronization means is also adapted to select at least part of the samples taken by the sampling means, the selected samples being separated by increasing intervals of time.

4. A device as in claim 3, characterized in that said synchronization means comprises elements for generating a clock signal (f$_H$) the frequency of which decreases as a function of the propagation time of the reflected signals, all the samples of signals coming from the sampling means being digitized and recorded.

5. A device as in claim 4, characterized in that said synchronization means comprises a variable-frequency oscillator (11) the oscillation frequency of which depends on a control voltage, and means (12) for generating a control voltage adapted to decrease the oscillation frequency of the oscillator (11) as a function of te progagation time of the reflected signals and the given height.

6. A device as in claim 4, characterized in that said synchronization means comprises a fixed-frequency oscillator (13), a dividing element (14) adapted to generate a plurality of signals the frequencies of which are submultiples of the frequency of the signal of said oscillator (13), and an element (15) for successively selecting from the signals generated by the dividing element signals the frequency of which decreases in steps as a function of the propagation time of the reflected signals.

7. A device as in claim 3, characterized in that said synchronization means comprises an oscillator (10) adapted to generate a clock signal of fixed frequency, and means (19) for selecting from all the samples of signals from the sampling means (16) a set of samples separated by increasing intervals of time the values of which are determined as a function of the propagation time of the reflected signals and the given height.

**FIG.1**

**FIG.2**

**FIG.3**

**FIG.4**

**FIG.5**

**FIG.6**